# EUROPÄISCHE PATENTSCHRIFT

(11) **EP 1 386 059 B1**
(45) Veröffentlichungstag und Bekanntmachung des Hinweises auf die Patenterteilung: **09.07.2008**
(21) Anmeldenummer: 02737800.9
(22) Anmeldetag: 16.04.2002
(51) Int. Cl.: F01D 11/02, F16J 15/32

(54) **ANORDNUNG FÜR EINE NICHT-HERMETISCHE DICHTUNG IN EINER TURBOMASCHINE**
NON-HERMETIC SEAL ARRANGEMENT IN A TURBOMACHINE
DISPOSITIF D'ETANCHEITE NON HERMETIQUE DANS UNE TURBOMACHINE

(30) Priorität: 10.05.2001 DE 10122732
(43) Veröffentlichungstag der Anmeldung: 04.02.2004
(73) Patentinhaber: MTU Aero Engines GmbH, 80995 München (DE)
(72) Erfinder: BEICHL, Stefan, 82211 Herrsching (DE); GRÄBELDINGER, Wilhelm, 80637 München (DE); RAUSCHMEIER, Alexander, 80802 München (DE)
(86) Internationale Anmeldenummer: PCT/DE2002/001402
(87) Internationale Veröffentlichungsnummer: WO 2002/090720

(56) Entgegenhaltungen:
- WO-A-01/13013
- DE-A- 19 628 559
- DE-A- 19 720 649
- DE-A- 19 803 502
- US-A- 4 919 439
- US-A- 5 114 159
- US-A- 5 351 971
- US-A- 5 715 596
- US-A- 5 884 918
- US-B1- 6 168 162

## Beschreibung

Die Erfindung betrifft eine Anordnung für eine nicht-hermetische Dichtung zwischen einem Stator und einem Rotor einer Turbomaschine, gemäß dem Oberbegriff des Patentanspruches 1.

Mit dem Begriff Turbomaschinen sind Leistung aufnehmende und Leistung erzeugende, beschaufelte Strömungsmaschinen mit Stator und Rotor gemeint, wie Verdichter, Pumpen und Turbinen. Die Erfindung zielt insbesondere auf Gasturbinen in zumindest teilweise axialer Bauart für mobile und stationäre Anwendungen ab, sie kann aber beispielsweise auch für Dampfturbinen von Interesse sein. Dabei geht es konkret um den Dichtungsbereich zwischen Leitschaufeln und Rotor radial innerhalb des eigentlichen Strömungskanales. In der Gasturbinentechnik wird dieser Bereich häufig als Inner Air Seal (IAS) bezeichnet.

Die DE 196 28 559 A1 beschreibt eine gattungsgemäße Anordnung für die Inner Air Seal mit einem statorzugehörigen, an den Leitschaufelfüßen mittels einer Speichenzentrierung gelagerten Bürstendichtring, der zusammen mit einer zylindrischen Rotorfläche eine definiert durchlässige Fluidsperre bildet. Das Prinzip der Speichenzentrierung bringt dort Vorteile, wo bedingt durch thermische Einflüsse deutliche relative Maßänderungen zwischen koaxial angeordneten, verbundenen Bauteilen auftreten. Da die thermische Beaufschlagung und die Wärmekapazität benachbarter Bauteile sehr unterschiedlich sein können, dehnt sich beispielsweise ein Bauteil früher, schneller oder stärker als ein anderes, angrenzendes Bauteil. Eine Speichenzentrierung umfasst mindestens drei gleichmäßig über den Bauteilumfang verteilte Lagerstellen mit jeweils radialer Relativbeweglichkeit. Dabei wird davon ausgegangen, dass die Bauteile gleichmäßig expandieren und kontrahieren, das heißt Maßänderungen im wesentlichen ohne Formänderungen verlaufen. In vielen Anwendungen ist dies zumindest näherungsweise gegeben, wobei Lagerspiele und Elastizitäten kleine Abweichungen kompensieren. Die Lagerstellen mit einem translatorischen Freiheitsgrad können z.B. als Gleitstein/Nut- oder Zapfen/Buchse-Kombination ausgeführt sein. Speichenzentriert verbundene Bauteile sind gegeneinander verdrehgesichert und bleiben bei relativen Maßänderungen (Umfang, Durchmesser) konzentrisch. Eine relative Axialfixierung ist dabei ebenso realisierbar. Bei der Ausführung gemäß vorliegender Offenlegungsschrift DE 196 28 559 A1 ist beispielsweise ein Anlageelement (9) in Form eines Randes oder Wulstes auf der Seite mit niedrigerem Betriebsdruck vorhanden, gegen das der Bürstendichtring (Positionen 1,2) gedrückt wird, und das auch eine Dichtfunktion übernimmt. Das Anlageelement (9) dichtet am radial äußeren Rand einer Bürstendichtringstirnfläche ab, so dass die Betriebsdruckdifferenz auf einem Großteil der Bürstendichtringstirnseite wirksam ist. Die hierbei wirksame Fläche erstreckt sich radial von der rotierenden Dichtfläche am Innenteil (3) bis zum Anlageelement (9). Das Produkt aus Druckdifferenz und wirksamer Fläche kann zu einer beachtlichen Axialkraft auf den Bürstendichtring und letztlich das Anlageelement führen. In Verbindung mit den zyklisch auftretenden, radialen Relativbewegungen zwischen dem Bürstendichtring (Pos. 1) und dem Anlageelement (9) hat dies hohe Reibung und Verschleiß (Fretting etc.) zur Folge. Bei der Inner Air Seal ist es in der Regel so, dass die radial außen am Gehäuse aufgehängten Leitschaufeln bei Heißgasbeaufschlagung radial nach innen, d.h. zum Bürstendichtring hin, "wachsen" und sich bei Abkühlung wieder radial nach außen "zurückziehen". Dies geschieht bei jeder thermischen Be- und Entlastung. Abgesehen von Reibung und Verschleiß kann auch die "freie" Zentrierung behindert werden, so dass sich ggf. der Bürstendichtring verformt, und damit die Dichtwirkung verändert wird.

Das Dokument US-A-5 351 971 betrifft eine Anordnung für eine nicht-hermetische Dichtung zwischen einem Stator und einem Rotor (shaft 20) mit einem Bürstendichtring (sideplate 30, bristles 50, squeeze plate 90), dessen Borsten (50) mit einer rotierenden, zylindrischen Dichtfläche (20) eine definiert durchlässige Fluidsperre bilden. Auf der Dichtungsseite mit in der Regel niedrigerem Betriebsdruck (p _{DISCHARGE}) ist in geringem radialem Abstand zur rotierenden Dichtfläche (20) ein Stützring (retaining washer 70) für eine axiale, dichtende Abstützung der Borsten (50) über eine zusätzliche, die Borsten (50) kontaktierende Platte (backplate 40) angeordnet. Die Aufnahme bzw. Lagerung des Bürstendichtrings (30, 50, 90) ist für den in der Regel höheren Betriebsdruck (p _{SYSTEM}) druckdurchlässig ausgeführt (ports 130, recess 80), wodurch der Bürstendichtring auf einer Stirnseite direkt, auf der anderen Stirnseite über die Platte (40) großteils indirekt mit dem selben, höheren Betriebsdruck (p _{SYSTEM}) beaufschlagt und somit axial druckentlastet ist. Dadurch wird der Axialdruck der Platte (40) auf den Stützring (70) erheblich reduziert. Da jedoch an der borstenseitigen Stirn- und Anlagefläche der Platte (40) ein Betriebsdruck zu erwarten ist, dessen Höhe eher dem niedrigeren Betriebsdruck (p _{DISCHARGE}) als dem höheren Betriebsdruck (p _{SYSTEM}) entsprechen wird, sind die Borsten (50) selbst nicht druckentlastet sondern werden mit druckdifferenzabhängigem Axialdruck gegen die Platte (40) gepresst. Dies erhöht in nachteiliger Weise die Reibung und den Verschleiß an den Borsten (50) und reduziert deren Beweglichkeit und somit deren Dichtwirkung besonders bei radialen Auslenkungen des Rotors (20).

Demgegenüber besteht die Aufgabe der Erfindung darin, eine Anordnung für eine nicht-hermetische Dichtung zwischen einem kranzförmigen Leitschaufelgitter und einem Rotor einer zumindest bereichsweise in Axialbauart ausgeführten Turbomaschine bereitzustellen, die unter Anwendungen des Prinzips der speichenzentrierten Bürstendichtung deutliche Verbesserungen durch eine Reduzierung von Reibung und Verschleiß, durch eine zwangskräftefreie Zentrierung sowie durch eine Reduzierung der Sekundärleckage im Bereich der axialen Anlagefläche des Bürstendichtringes bringt.

Diese Aufgabe wird durch die in Patentanspruch 1 gekennzeichneten Merkmale gelöst, in Verbindung mit den gattungsbildenden Merkmalen in dessen Oberbegriff. Als dichtendes Anlageelement für die Borsten auf der Seite mit niedrigerem Betriebsdruck ist in radialer Nähe zur rotierenden Dichtfläche ein Stützring angeordnet, der integral mit den Leitschaufelfüßen verbunden und somit nicht mehr Bestandteil des Bürstendichtringes ist. In Verbindung mit einer druckdurchlässigen Ausführung der Speichenzentrierung wird die Anordnung axial weitestgehend druckentlastet und somit kräftefrei, da die Betriebsdruckdifferenz nur im Bereich der kleinen, ringförmigen Borstenfläche zwischen Rotor und Stützring wirksam ist. Da der zu erwartende Borstenverschleiß am Stützring gering und tendenziell eher kleiner als der Verschleiß an der rotierenden Dichtfläche sein dürfte, sollte die letztgenannte Verschleißart das Kriterium für einen Austausch des Bürstendichtringes bleiben. Es wird davon ausgegangen, dass über den Austausch des Bürstendichtringes hinaus weder am Rotor noch an den Leitschaufelfüßen einschließlich Stützring relevante Instandsetzungsmaßnahmen erforderlich sein werden. In Abhängigkeit davon, ob die Leitschaufeln eines Kranzes sämtlich Integral verbunden oder in Segmenten bzw. als Einzelteile angeordnet sind, wird auch der Stützring einteilig oder von Trennfugen unterbrochen, das heißt segmentiert, ausgeführt sein. Einzelne Leitschaufeln oder Segmente geringer Schaufelzahl können sich im Betrieb geringfügig um eine -gedachte- radiale Achse elastisch verwinden (Twist), so dass die Stützringsegmente an den Leitschaufelfüßen nicht mehr eine optimal plane, sondern an den Trennfugen leicht gestufte Anlagefläche bilden. Dies wird von den Borsten elastisch ausgeglichen, ohne die Dichtwirkung zu beeinträchtigen. Es sei angemerkt, dass bei Anordnungen nach dem Stand der Technik (siehe u.a. DE 196 28 559 A1) zwischen verwundenen Anlagesegmenten und dem starren Bürstenträger ungewollte Leckageströme (Sekundärleckage) in relevanter Größenordnung entstehen können.

In den Unteransprüchen sind vorteilhafte Ausgestaltungen der Anordnung nach dem Hauptanspruch **gekennzeichnet**.

Die Erfindung wird anschließend anhang der Zeichnungen noch näher erläutert. Dabei zeigen in vereinfachter, nicht maßstäblicher Darstellung:
Figur 1 einen Teillängsschnitt durch eine Gasturbine im Bereich einer Inner Air Seal,
Figur 2 eine axiale Teilansicht der Dichtungselemente gemäß Figur 1,
Figur 3 einen Querschnitt durch einen Bürstendichtring mit Führungselement,
Figur 4 eine axiale Teilansicht des Bürstendichtringes gemäß Figur 3,
Figur 5 einen Querschnitt durch einen Bürstendichtring mit Versteifungsring und mit Führungselementen,
Figur 6 eine axiale Teilansicht des Bürstendichtringes gemäß Figur 5,
Figur 7 einen Querschnitt durch einen Bürstendichtring in Schweißkonstruktion mit Führungselementen,
Figur 8 eine axiale Teilansicht des Bürstendichtringes gemäß Figur 7, und
Figur 9 eine axiale Teilansicht der Dichtungselemente gemäß Figur 1 im Bereich einer Trennfuge.

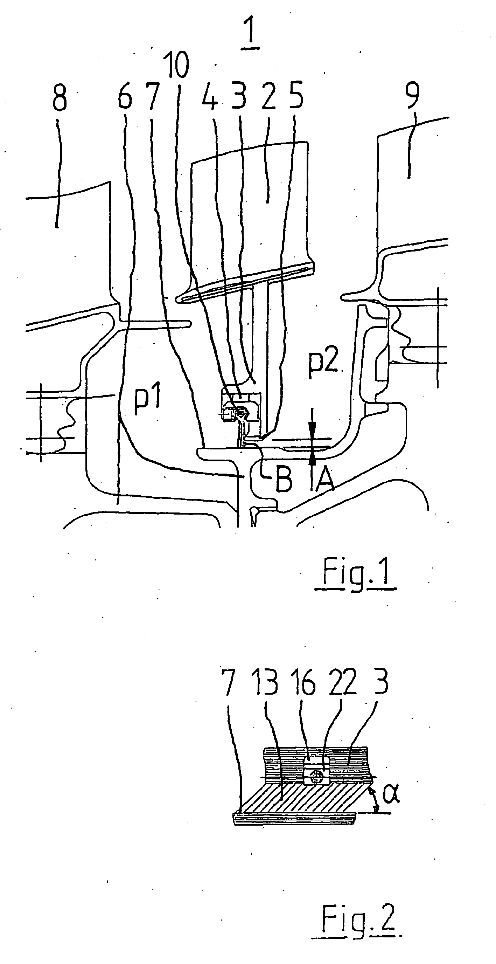

Figur 1 zeigt eine erfindungsgemäße Anordnung 1 im Bereich einer Inner Air Seal eines Gasturbinentriebwerkes. Man erkennt eine Leitschaufel 2, deren Aufhängung am Stator, d.h. am Triebwerksgehäuse, nicht dargestellt ist, da sie in bekannter Weise ausgeführt sein soll. Links und rechts, d.h. stromaufwärts und stromabwärts der Leitschaufel 2 erkennt man Laufschaufeln 8 und 9, die Bestandteile eines Rotors 6 sind. Zu letzterem gehört auch eine mitrotierende, zylindrische Dichtfläche 7. Der Fuß 3 der Leitschaufel 2 erstreckt sich radial nach innen, hier nach unten, bis in den eigentlichen Dichtungsbereich am Rotor. Alle Leitschaufeln 2 zusammen, einschließlich ihrer Füße 3, bilden einen rotorkonzentrischen Kranz mit im wesentlichen radialer Schaufelorientierung. Bei kleineren Gasturbinen sind die Leitschaufeln häufig integral verbunden, z.B. in Form einer gegossenen bzw. geschweißten Konstruktion, bei größeren Maschinen ist es üblich, mehrere Schaufeln integral zu einem Segment zusammenzufassen, wobei dann mehrere solcher Segmente einen Leitschaufelkranz bilden. Zwischen den Segmenten sind Trennfugen vorhanden, die bedarfsweise mit geeigneten Dichtungselementen überbrückt werden. Im Extremfall bildet jede einzelne Leitschaufel ein separates Bauteil, was die Montage erleichtern kann.

Die vorliegende Erfindung ist prinzipiell bei allen diesen Varianten anwendbar. Als statisches Dichtungselement ist ein Bürstendichtring 10 über eine Speichenzentrierung 4 an den Leitschaufelfüßen 3 aufgehängt. Die Anordnung 1 trennt einen Raum mit höherem Betriebsdruck p1 von einem Raum mit niedrigerem Betriebsdruck p2. Auf der Seite niedrigeren Druckes ist in geringem radialem Abstand A zur Dichtfläche 7 ein integral mit den Leitschaufelfüßen 3 verbundener, ggf. segmentierter Stützring 5 für die Borsten des Bürstendichtringes 10 angeordnet. Da die Speichenzentrierung 4 druckdurchlässig ausgeführt ist, wirkt der höhere Betriebsdruck p1 auch auf die rechte Stirnseite des Bürstendichtringes bis hin zur Anlage des Stützringes 5 an den Borsten. Lediglich die sehr kleine, ringförmige Borstenfläche B zwischen Dichtfläche 7 und Stützring 5 wird durch den Differenzdruck p1 - p2 belastet, so dass sich nur eine kleine resultierende Axialkraft auf die Borstenenden und den Stützring 5 ergibt. Die Speichenzentrierung 4 ist somit axial druckentlastet, d.h. weitgehend reibungs- und verschleißarm.

Figur 2 zeigt zum besseren Verständnis eine axiale Teilansicht der Dichtungselemente. Man erkennt die rotierende Dichtfläche 7, die hierzu drehrichtungskonform unter einem Winkel α angestellten Borsten 13, sowie ein gleitsteinartiges Führungselement 22, das in einer Nut 16 des Leitschaufelfußes 3 radial verschiebbar gelagert ist. Es wäre auch denkbar, die Nut am Bürstendichtring und den Gleitstein am Leitschaufelfuß anzuordnen.

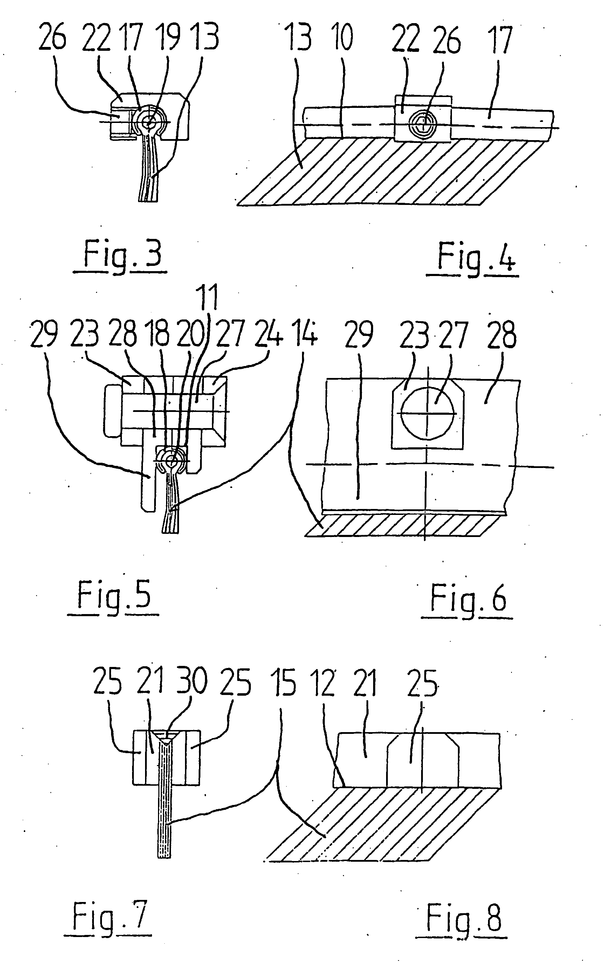

Figur 3 zeigt in größeren Maßstab einen axialen Schnitt durch den Bürstendichtring 10 im Bereich des Führungselementes 22. Es handelt sich hier um eine reibschlüssige Variante des Bürstendichtringes, bei der die Borsten 13 um einen Kern 19 herumgeführt und mittels eines C-förmigen Klemmringes 17 fixiert sind. Beide Enden jeder Borste liegen somit im Dichtungsbereich am Rotor. Als Teil der Speichenzentrierung ist das Führungselement 22 mittels einer Klemmschraube 26 reibschlüssig und verstellbar auf dem Klemmring 17 fixiert.

Figur 4 zeigt die zugehörige, axiale Ansicht.

Figur 5 stellt einen Bürstendichtring 11 dar, dessen Bürstenelement mittels eines zweiteiligen Versteifungsringes 28 stabilisiert ist. Eine solche Ausführung bietet sich für Geometrien mit größerem Durchmesser an, bei denen die Einheit aus Klemmring 18, Kern 20 und Borsten 14 für sich nicht mehr ausreichend formstabil wäre. Der Versteifungsring 28 ist um den Außenumfang des Klemmringes 18 geführt und hält diesen auch formschlüssig gegen Auslenkungen in beide Axialrichtungen fest. Auf der Seite höheren Betriebsdruckes ist ein integraler Deckring 29 radial relativ weit nach innen geführt, der die Borsten 14 insbesondere gegen rotationsinduzierte Wirbelströmungen schützen kann. Die Führungselemente 23, 24 für die Speichenzentrierung sind hier mittels eines Niets 27 befestigt, der auch die Teile des Versteifungsringes 28 zusammenhält. Bei entsprechender Konstruktion können die Führungselemente 23,24 um die Nietachse drehbar ausgeführt sein, was der Leichtgängigkeit der Speichenzentrierung zugute kommen kann. Es wäre auch möglich, die axiale Erstreckung des Versteifungsringes nur so groß wie diejenige des Klemmringes zu wählen, wobei radial nach innen gezogene Führungselemente die axiale Fixierung des Bürstenelementes übernehmen könnten. Dies entspräche mehr einer Leichtbauweise. Je nach den lokalen Strömungsverhältnissen kann man häufig auf einen Deckring verzichten. Eine weitere Ausführung könnte so aussehen, dass auf einer Seite eine Schulter am Versteifungsring als axialer Anschlag für das Bürstenelement dient, wohingegen auf der anderen Seite radial nach innen gezogene Führungselemente diese Funktion übernehmen.

Figur 6 stellt die zu Figur 5 gehörige, axiale Ansicht dar.

Figur 7 zeigt einen Bürstendichtring 12, dessen Borsten 15 nicht - oder wenigstens nicht ausschließlich - reibschlüssig geklemmt, sondern mittels einer Schweißnaht 30 stoffschlüssig in einen Haltering integriert sind. Eine vergleichbare Befestigung könnte auch durch Löten oder Kleben erreicht werden, bei ggf. reduzierter Temperaturbeständigkeit. Die beidseitigen Führungselemente 25 sind hier durch Werkstoffabtrag aus dem Haltering 21 herausgearbeitet, z.B. durch Fräsen oder ECM-Bearbeitung.

Figur 8 zeigt wiederum die zugehörige, axiale Ansicht.

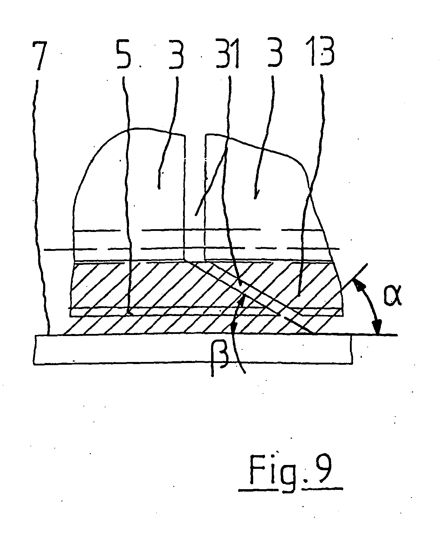

Figur 9 schließlich betrifft Ausführungen mit Trennfugen zwischen Leitschaufelfüßen, d.h. Versionen mit segmentierten oder als Einzelteile angeordneten Leitschaufeln. Man erkennt zwei benachbarte Leitschaufelfüße 3 mit einer dazwischenliegenden Trennfuge 31, welche auch den Stützring 5 örtlich unterbricht. Die Borsten 13 sind in einem Winkel α zur rotierenden Dichtfläche 7 - genauer gesagt zu deren örtlicher Tangente - angestellt. Um ein Verhaken oder Verklemmen der Borsten 13 bei Bewegungen relativ zur Trennfuge 31 in letzterer zu vermeiden, ist die im übrigen radial verlaufende Trennfuge im Borstenbereich unter einem Winkel β geführt, der eine vorzugsweise rechtwinkelige Überkreuzung mit der Borstenrichtung α zur Folge hat. Falls dies zu Problemen hinsichtlich der Leitschaufelmontage führt, kann die Trennfuge auch weniger stark abgewinkelt werden bzw. nur radial verlaufen.

Es sei noch angemerkt, dass die Anordnung der Borsten im Bürstendichtring nicht nur vorwiegend radial sondern auch axial mit radialer Abwinkelung der freien Enden sein kann (Hakenbürstendichtung).

## Patentansprüche

1. Anordnung, für eine nicht-hermetische Dichtung zwischen einem Stator und einem Rotor einer Turbomaschine, insbesondere einer Gasturbine, mit statorzugehörigen, axial durchströmten sowie als kranzförmiges Gitter rotorkonzentrisch angeordneten Leitschaufeln (2) bzw. Leitschaufelsegmenten, mit einem über eine sogenannte Speichenzentrierung (4) im Fußbereich der Leitschaufeln bzw. Leitschaufelsegmente am Leitschaufelgitter gelagerten Bürstendichtring (10) mit Borsten, mit einem integral mit den Füßen (3) der Leitschaufeln bzw. Leitschaufelsegmente verbundenen Stützring (5), und mit einer rotierenden, zylindrischen Dichtfläche (7) zur Bildung einer definiert durchlässigen Fluidsperre mit den Borsten, **dadurch gekennzeichnet,**
**dass** der Stützring (5) auf der Dichtungsseite mit in der Regel niedrigerem Betriebsdruck (p2) in geringem radialem Abstand (A) zur rotierenden Dichtfläche (7) für eine axiale, dichtende Abstützung der Borsten (13,14,15) angeordnet und wie die Leitschaufeln (2) bzw. Leitschaufelsegmente ohne oder mit Trennfugen (31) ausgeführt ist, und dass die Speichenzentrierung (4) für den in der Regel höheren Betriebsdruck (p 1) bis hin zum Stützring (5) druckdurchlässig ausgeführt ist, wodurch der Bürstendichtring (10, 11, 12) auf beiden Stirnseiten unmittelbar mit dem selben, höheren Betriebsdruck (p1) beaufschlagt, das heißt axial druckentlastet ist, mit Ausnahme der sich radial von der rotierenden Dichtfläche (7) bis zum Stützring (5) erstreckenden Borstenfläche (B).

2. Anordnung nach Anspruch 1, **dadurch gekennzeichnet, dass** der Bürstendichtring (10,11,12) mit reibschlüssiger Borstenfixierung zwischen einem C-förmigen Klemmring (17,18) und einem Kern (19,20) unter Umschlingung des letzteren oder mit stoffschlüssiger Borstenfixierung in einem Haltering (21) durch Schweißen (30), Löten oder Kleben ausgeführt ist, wobei der freistehende, federnde Bereich der Borsten einen drehrichtungsabhängigen Anstellwinkel (α) mit radialer und tangentialer Komponente zur rotierenden Dichtfläche (7) aufweist.

3. Anordnung nach Anspruch 1 oder 2, **dadurch gekennzeichnet, dass** gleitsteinartige Führungselemente (22 bis 25) reibschlüssig, z.B. mittels Klemmschrauben (26), stoffschlüssig und/oder formschlüssig, z.B. mittels Nieten (27), mit dem Bürstendichtring (10,11) verbunden sind oder durch abtragende Fertigung, z.B. durch Fräsen, an diesem (12) geformt und somit integral mit diesem verbunden sind und in radialen Nuten (16) an den Leitschaufelfüßen (3) beweglich gelagert sind.

4. Anordnung nach Anspruch 2 oder 3 mit einem einen C-förmigen Klemmring aufweisend den Bürstendichtring, **dadurch gekennzeichnet, dass** um den Außenumfang des Klemmringes (18) herum ein diesen haltender, ein- oder mehrteiliger Versteifungsring (28) angeordnet ist, der auf der dem Stützring (5) axial gegenüberliegenden Dichtungsseite einen integralen, sich radial nach innen bis in den freistehenden Bereich der Borsten (14) erstreckenden Deckring (29) aufweisen kann; wobei die axiale Fixierung des Klemmringes (18) formschlüssig durch den Versteifungsring (28) und/oder durch die gleitsteinartigen Führungselemente der Speichenzentrierung erfolgt.

5. Anordnung nach einem oder mehreren der Ansprüche 2 bis 4 mit einem durch Trennfugen segmentierten Stützring für die Borsten des Bürstendichtringes, **dadurch gekennzeichnet, dass** die Trennfugen (31) zur rotierenden Dichtfläche (7) einen Anstellwinkel (β) mit radialer und in Relation zu den im jeweiligen Trennfugenbereich angeordneten Borsten (13) tangential entgegengesetzter Komponente aufweisen, so dass sich Borsten (13) und Trennfugen (31) bei axialer Blickrichtung vorzugsweise in rechtem Winkel kreuzen.

## Claims

1. Non-hermetic seal arrangement between a stator and a rotor of a turbomachine, in particular a gas turbine, with axial-flow stator guide vanes (2) or guide vane segments arranged concentric with the rotor as a rim-type grid, with a brush sealing ring (10) with bristles mounted by means of a so-called spoke centring device (4) in the root region of the guide vanes or guide vane segments on the guide vane grid, with a backing ring (5) integrally joined to the roots (3) of the guide vanes or guide vane segments, and with a rotating cylindrical sealing surface (7) for the provision of a defined permeable fluid barrier together with the bristles, **characterised in that**
the backing ring (5) is, on the sealing side with the generally lower operating pressure (p2), located at a small radial distance (A) from the rotating sealing surface (4) for an axial sealing support of the bristles (13, 14, 15) and is, as are the guide vanes (2) or guide vane segments, designed with or without partitions (31), and **in that** the spoke centring device (4) for the generally higher operating pressure (p1) is designed to be pressure-permeable up to the backing ring (5), whereby the brush sealing ring (10, 11, 12) is subjected to the same higher operating pressure (p1) on both end faces, i.e. axially balanced, with the exception of the bristle surface (B) extending radially from the rotating sealing surface (7) to the backing ring (5).

2. Arrangement according to claim 1, **characterised in that** the brush sealing ring (10, 11, 12) is designed with non-positive bristle location between a C-shaped clamping ring (17, 18) and a core (19, 20) while encompassing the latter, or with adhesive bristle location in a retaining ring (21) by means of welding (30), soldering or bonding, wherein the free resilient section of the bristles has an angle of incidence (α) dependent on direction of rotation with a radial and a tangential component relative to the rotating sealing surface (7).

3. Arrangement according to claim 1 or 2, **characterised in that** sliding block-type guide elements (22 to 25) are joined to the brush sealing ring (10, 11) non-positively, for example by means of clamping screws (26), or by adhesive force and/or positively, for example by means of rivets (27), or are produced integrally therewith (12) in a machining process, for example by milling, and **in that** they are movably mounted in radial grooves (16) on the guide vane roots (3).

4. Arrangement according to claim 2 or 3, with a brush sealing ring provided with a C-shaped clamping ring, **characterised in that** a single- or multi-part reinforcing ring (28) is arranged around the outer circumference of the clamping ring (18) to hold the latter, which reinforcing ring may include an integral cover ring (29) extending radially inwards to the free section of the bristles (14) on the seal side which is axially opposite the backing ring (5), wherein the clamping ring (18) is axially located positively by the reinforcing ring (28) and/or by the sliding block-type guide elements of the spoke centring device.

5. Arrangement according to one or more of claims 2 to 4, with a backing ring segmented by partitions for the bristles of the brush sealing ring, **characterised in that** the partitions (31) have an angle of incidence (β) with a radial component and a component which is tangentially opposite in relation to the bristles (13) located in each partition region relative to the rotating sealing surface (7), so that the bristles (13) and the partitions (31) preferably cross each other at right angles if viewed in the axial direction.

## Revendications

1. Dispositif pour réaliser une étanchéité non hermétique entre le stator et le rotor d'une turbomachine, notamment d'une turbine à gaz, dans lequel
- le stator dispose d'aubes directrices (2) ou des segments d'aubes directrices que traversent axialement les gaz et qui constituent une grille en forme de couronne concentrique au rotor,
- une bague d'étanchéité à brosse (10) avec des poils, est montée par l'intermédiaire d'un centrage à rayons (4), dans la zone des pieds des aubes (3) ou des segments d'aubes sur la grille d'aubes,
- une bague de soutien (5) est reliée intégralement aux pieds (3) des aubes directrices ou des segments d'aubes,
- une portée d'étanchéité cylindrique (7), tournante, forme avec les poils un barrage offrant aux fluides une perméabilité définie,
**caractérisé en ce que**
- la bague de soutien (5) est disposée sur le côté d'étanchéité présentant en général une pression de service plus basse (p2), à une faible distance radiale (A) de la portée d'étanchéité tournante (7), pour soutenir axialement et avec étanchéité les poils (13, 14, 15), cette bague, comme les aubes directrices (2) ou les segments d'aubes directrices présentant ou non des joints de séparation (31),
- le centrage à rayons (4) est réalisé de manière à être perméable à la pression (p1), en général plus élevée, en direction de la bague de soutien (5) de sorte que la bague d'étanchéité à brosse (10, 11, 12) est soumise sur ses deux faces frontales directement à la même pression plus élevée (p1), ce qui signifie qu'elle n'est pas chargée axialement par la pression, à l'exception de la surface des poils (B) qui s'étend radialement de la portée d'étanchéité tournante (7) à la bague de soutien (5).

2. Dispositif selon la revendication 1,
**caractérisé en ce que**
la bague d'étanchéité à brosse (10, 11, 12) dont les poils sont fixés avec verrouillage par friction entre une bague de serrage (17, 18) en forme de C et un noyau (19, 20) qu'il contournent, ou dans une bague de maintien (21) avec fixation par la matière réalisée par soudage (30), brasage ou collage, la zone libre et élastique des poils, disposée selon un angle de réglage (α) en fonction du sens de rotation, présentant par rapport à la portée d'étanchéité tournante (7) des composantes radiales et tangentielles.

3. Dispositif selon la revendication 1 ou 2,
**caractérisé en ce que**
des éléments de guidage (22 à 25) sont reliés avec verrouillage par friction, au moyen par exemple de vis de serrage (26), par la matière et/ou avec verrouillage par combinaison de formes, au moyen par exemple de rivets (27), à la bague d'étanchéité à brosse (10,11) ou sont formés dans cette bague (12) par enlèvement de matière, par exemple par fraisage, en étant ainsi reliés intégralement à la bague, et ces éléments sont montés coulissants dans des rainures radiales (16) des pieds d'aubes directrices (3).

4. Dispositif selon la revendication 2 ou 3, comportant une bague d'étanchéité à brosse présentent une bague de serrage en forme de C,
**caractérisé en ce que**
périphériquement à la bague de serrage (18) et la maintenant, est disposée une bague de raidissement (28) en une ou plusieurs parties, qui peut présenter du côté de l'étanchéité axialement opposé à la bague de soutien (5) une bague de couverture (29) intégrale s'étendant radialement vers l'intérieur jusqu'à la zone où les poils (14) sont libres, la bague de serrage (18) étant fixée avec verrouillage par combinaison de formes par la bague de raidissement (28) et/ou par les éléments de guidage, du genre coulisseau, du centrale à rayons.

5. Dispositif selon une ou plusieurs des revendications 2 à 4, comportant pour les poils de la bague d'étanchéité à brosse, une bague de soutien segmentée par des joints de séparation,
**caractérisé en ce que**
les joints de séparation (31) présentent, par rapport à la portée d'étanchéité tournante (7), un angle d'incidence (β) avec une composante radiale et une composante tangentielle en opposition avec les poils (13) se trouvant dans la zone de joint de séparation correspondante, de sorte que les poils (13) et les joints de séparation (31), observés en direction axiale, se croisent à angle droit.
